# EUROPEAN PATENT APPLICATION

(11) **EP 3 316 527 A1**
(43) Date of publication of application: **02.05.2018**
(21) Application number: 17174043.4
(22) Date of filing: 01.06.2017
(51) Int. Cl.: H04L 12/58

(54) **METHOD AND DEVICE FOR MANAGING NOTIFICATION MESSAGES**

(30) Priority: 31.10.2016 CN 201610985132
(71) Applicant: Beijing Xiaomi Mobile Software Co., Ltd., Beijing 100085 (CN)
(72) Inventor: LIU, Ming, Beijing, Beijing 100085 (CN)
(74) Representative: dompatent von Kreisler Selting Werner - Partnerschaft von Patent- und Rechtsanwälten mbB

(57) **Abstract**

The present disclosure relates to a method and a device for managing notification messages. The method includes: receiving a current message viewing request of a user (101); obtaining stored history notification messages according to the message viewing request (102); and displaying the obtained history notification messages (103). Thus, even if the notification message in the notification bar is cleared, the user can still request to view the cleared notification message.

## Description

### TECHNICAL FIELD

The present disclosure relates to smart terminal field, and more particularly, to a method and a device for managing notification messages.

### BACKGROUND

With development of the internet communication technologies, usage rate of applications installed in various smart terminals (such as mobile phones) is continuously improved. As an important interactive mode between a user and an application, notification messages of the application installed in a terminal could be quickly accessed by the user through a notification bar. However, when the notification message has been cleared from the notification bar of the terminal, the notification message will not be displayed by the terminal, leading to the user failing to view the notification message.

### SUMMARY

In order to solve the problems in the related art, the present disclosure provides a method and a device for managing notification messages.

According to a first aspect of embodiments of the present disclosure, a method for managing notification messages is provided and includes:
receiving a current message viewing request of a user;
obtaining stored history notification messages according to the message viewing request, in which the history notification messages include a first notification message having been cleared from a notification bar of the terminal; and
displaying the obtained history notification messages.

Alternatively, the method further includes:
obtaining the first notification message displayed in the notification bar;
storing the first notification message.

Alternatively, the method further includes:
obtaining identification information of the first notification message;
determining a target history notification message corresponding to the identification information;
updating the target history notification message according to the first notification message.

Alternatively, receiving a current message viewing request of a user includes:
when a first triggering operation corresponding to the first notification message currently displayed in the notification bar is received from the user, determining whether the first triggering operation meets a first preset operation;
when the first triggering operation meets the first preset operation, generating the message viewing request.

Alternatively, determining whether the first triggering operation meets a first preset operation includes:
when the first triggering operation includes click operations and a number of the click operations reaches a preset number, determining that the first triggering operation meets the first preset operation;
when the first triggering operation includes a first press operation and a duration of the first press operation reaches a preset time, determining that the first triggering operation meets the first preset operation.

Alternatively, the message viewing request includes a search condition input by the user, and obtaining stored history notification messages according to the message viewing request includes:
obtaining history notification messages matched with the search condition.

Alternatively, when the search condition includes an identification of a push end for pushing the history notification messages, obtaining history notification messages matched with the search condition includes: obtaining history notification messages corresponding to the push end according to the identification of the push end;
when the search condition includes a search time period, obtaining history notification messages matched with the search condition includes: obtaining history notification messages in the search time period.

Alternatively, displaying the obtained history notification messages includes:
displaying the history notification messages according to displaying priorities of the obtained history notification messages; or
displaying the history notification messages according to displaying a order input by the user.

Alternatively, the method further includes:
receiving a collecting instruction corresponding to the history notification messages from the user;
collecting the history notification messages according the collecting instruction.

Alternatively, receiving a collecting instruction corresponding to the history notification messages from the user includes:
when a second triggering operation corresponding to the displayed history notification messages is received from the user, determining whether the second triggering operation meets a second preset operation;
when the second triggering operation meets the second preset operation, generating the collecting instruction.

Alternatively, determining whether the second triggering operation meets a second preset operation includes:
when the second triggering operation includes a second press operation and a pressure of the second press operation reaches a preset pressure, determining that the second triggering operation meets the second preset operation;
when the second triggering operation includes a sliding operation and a sliding direction of the sliding operation is a preset direction, determining that the second triggering operation meets the second preset operation.

Alternatively, the method further includes:
receiving an uninstall instruction corresponding to a push end for pushing the history notification messages from the user;
after uninstalling the push end according to the uninstall instruction, deleting the history notification messages corresponding the push end.

According to a second aspect of embodiments of the present disclosure, a device for managing notification messages is provided and includes:
a first receiving module, configured to receive a current message viewing request of a user;
a first obtaining module, configured to obtain stored history notification messages according to the message viewing request, in which the history notification messages include a first notification message having been cleared from a notification bar of the terminal; and
a displaying module, configured to display the obtained history notification messages.

Alternatively, the device further includes:
a second obtaining module, configured to obtain the first notification message displayed in the notification bar;
a storing module, configured to store the first notification message.

Alternatively, the device further includes:
a third obtaining module, configured to obtain identification information of the first notification message;
a determining module, configured to determine a target history notification message corresponding to the identification information;
an updating module, configured to update the target history notification message according to the first notification message.

Alternatively, the first receiving module is configured to:
when a first triggering operation corresponding to the first notification message currently displayed in the notification bar is received from the user, determine whether the first triggering operation meets a first preset operation;
when the first triggering operation meets the first preset operation, generate the message viewing request.

Alternatively, the first receiving module is configured to:
when the first triggering operation includes click operations and a number of the click operations reaches a preset number, determine that the first triggering operation meets the first preset operation;
when the first triggering operation includes a first press operation and a duration of the first press operation reaches a preset time, determine that the first triggering operation meets the first preset operation.

Alternatively, the message viewing request includes a search condition input by the user, and the first obtaining module is configured to obtain history notification messages matched with the search condition.

Alternatively, when the search condition includes an identification of a push end for pushing the history notification messages, the first obtaining module is configured to obtain history notification messages corresponding to the push end according to the identification of the push end;
when the search condition includes a search time period, the first obtaining module is configured to obtain history notification messages in the search time period.

Alternatively, the displaying module is configured to display the history notification messages according to displaying priorities of the obtained history notification messages, or to display the history notification messages according to a displaying order input by the user.

Alternatively, the device further includes:
a second receiving module, configured to receive a collecting instruction corresponding to the history notification messages from the user;
a collecting module, configured to collect the history notification messages according the collecting instruction.

Alternatively, the second receiving module is configured to:
when a second triggering operation corresponding to the displayed history notification messages is received from the user, determine whether the second triggering operation meets a second preset operation;
when the second triggering operation meets the second preset operation, generate the collecting instruction.

Alternatively, the second receiving module is configured to:
when the second triggering operation includes a second press operation and a pressure of the second press operation reaches a preset pressure, determine that the second triggering operation meets the second preset operation;
when the second triggering operation includes a sliding operation and a sliding direction of the sliding operation is a preset direction, determine that the second triggering operation meets the second preset operation.

Alternatively, the device further includes:
a third receiving module, configured to receive an uninstall instruction corresponding to a push end for pushing the history notification messages from the user;
a deleting module, configured to delete the history notification messages corresponding the push end, after the push end is uninstalled according to the uninstall instruction.

According to a third aspect of embodiments of the present disclosure, a device for managing notification messages is provided and includes:
a processor;
a memory for storing instructions executable by the processor;
wherein the processor is configured to run the instructions stored in the memory so as to perform the method for managing notification messages according to any one of the first aspect of embodiments of the present disclosure.

According to a fourth aspect of embodiments of the present disclosure, a program product is provided and has stored therein instructions that, when executed by one or more processors of an apparatus, causes the apparatus to perform the method for managing notification messages according to any one of the first aspect of embodiments of the present disclosure.

According to a fifth aspect of embodiments of the present disclosure, a computer program is provided. When executing on a processor, the computer program performs the method for managing notification messages according to any one of the first aspect of embodiments of the present disclosure.

The technical solutions provided in embodiments of the present disclosure may have following advantageous effects. By receiving the current message viewing request of the user, obtaining stored history notification messages according to the message viewing request, and displaying the obtained history notification messages, the user can still request to view the notification message even if the notification message has already been cleared from the notification bar.

It is to be understood that both the foregoing general description and the following detailed description are exemplary and explanatory only and are not restrictive of the present disclosure.

### BRIEF DESCRIPTION OF THE DRAWINGS

Accompanying drawings herein are incorporated in and constitute a part of the specification, and illustrate exemplary embodiments in line with the present disclosure, and serve to explain the principle of the present disclosure together with the description.
Fig. 1 is a flow chart of a method for managing notification messages according to an exemplary embodiment of the present disclosure.
Fig. 2 is a flow chart of a method for managing notification messages according to another exemplary embodiment of the present disclosure.
Fig. 3 is a block diagram of a device for managing notification messages according to a first exemplary embodiment of the present disclosure.
Fig. 4 is a block diagram of a device for managing notification messages according to a second exemplary embodiment of the present disclosure.
Fig. 5 is a block diagram of a device for managing notification messages according to a third exemplary embodiment of the present disclosure.
Fig. 6 is a block diagram of a device for managing notification messages according to a fourth exemplary embodiment of the present disclosure.
Fig. 7 is a block diagram of a device for managing notification messages according to a fifth exemplary embodiment of the present disclosure.
Fig. 8 is a schematic diagram showing a structure of a device for managing notification messages according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The present disclosure may be applied in a scenario of managing notification messages. A terminal (such as a mobile phone or a tablet computer) may push a notification message to a user by a notification bar. The notification message may be an application message (such as a reminder message) pushed by an application or a system message (such as a system updating message) of the terminal. In the related art, after seeing the notification message displayed in the notification bar, the user may clear the notification message displayed in the notification bar timely to prevent the notification bar being occupied, thus avoiding missing important notification due to too many notification messages. For example, the notification message may be cleared by following ways: if the user clicks and views the notification message, the viewed notification message is cleared from the notification bar. Or, the user clears the notification message by clicking a clear key. In the related art, for the cleared notification message, the user could not see it again.

In order to solve the above problems, in the solution provided in the present disclosure, by obtaining stored history notification messages according to the message viewing request, and displaying the obtained history notification messages, the user can still request to view a notification message even if the notification message has been cleared from the notification bar.

In the following, the present disclosure will be described in detail with reference to specific embodiments.

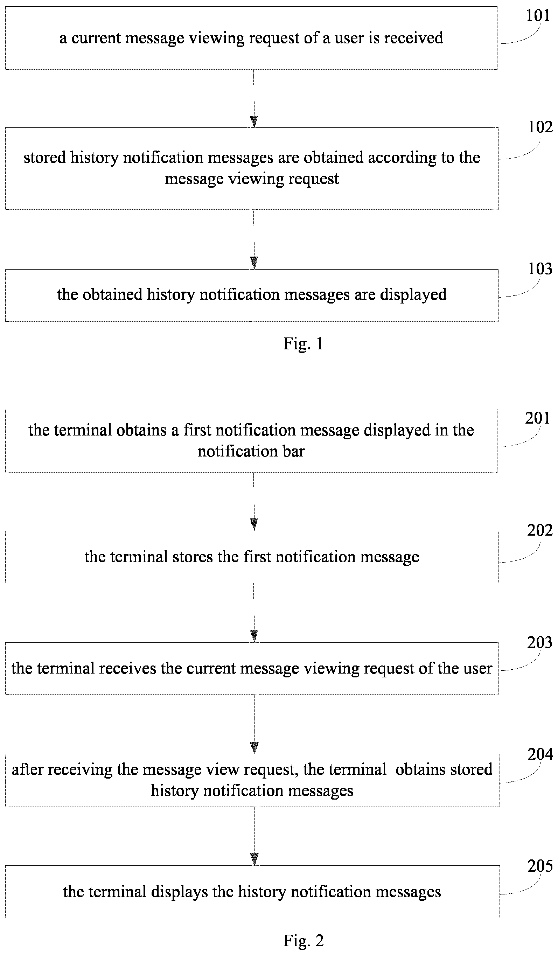

Fig. 1 is a flow chart of a method for managing notification messages according to an exemplary embodiment of the present disclosure. As shown in Fig. 1, the method is applied in a terminal and includes following steps.

In step 101, a current message viewing request of a user is received.

In step 102, stored history notification messages are obtained according to the message viewing request.

The history notification messages may be notification messages having been cleared from a notification bar of the terminal.

In step 103, the obtained history notification messages are displayed.

By using the above method, the user can still request to view a notification message even if the notification message has been cleared from the notification bar.

Fig. 2 is a flow chart of a method for managing notification messages according to another exemplary embodiment of the present disclosure. As shown in Fig. 2, the method is applied in the terminal and includes following steps.

In step 201, the terminal obtains a first notification message displayed in the notification bar.

The first notification message may be a notification message pushed from a push end to the terminal. For example, the push end may be an application (such as Xiaomi Mall, Xiaomi Sports and other software), and then the first notification message may be a notification message pushed by the application. Also, the push end may be a system of the terminal (such as Android system or IOS system), and then the first notification message may be an updating message pushed by the system of the terminal. This is not limited in the present disclosure.

In step 202, the terminal stores the first notification message.

In this step, when the first notification message is stored, feature information of the first notification message, such as a name and an icon of an application corresponding to the first notification message, pushing time of the first notification message, a title of the first notification message, description text of the first notification message and operations after clicking the first notification message and other information, may be obtained. Then, the obtained feature information is stored, so that corresponding history notification messages are quickly found according to the feature information when the user views the history notification messages. The history notification messages are cleared first notification messages.

It should be noted that, for first notification messages pushed by a same push end, the first notification messages may be update push for a same event. For example, a sport software (such as Xiaomi Sports) may periodically push walking steps of the user to the user, and thus pushing the steps is one event, and for this event, the sport software may push a plurality of first notification messages. In other words, since the number of walking steps varies at different time points, a first notification message is pushed according to corresponding steps at each pushing time. That is to say, each of the plurality of first notification messages includes different steps. For another example, a shopping software (such as Xiaomi Mall) may push logistics information of purchased goods to the user according to logistics situation of the purchased goods, and thus pushing the logistics information of same goods is one event, and for this event, the shopping software may push a plurality of first notification messages. Since the logistics situation varies, corresponding logistics information also varies. That is to say, each of the plurality of first notification messages includes different logistics information.

In the above cases, as the user may be more concerned with the first notification message at current time, in another embodiment of the present disclosure, after the terminal obtains a first notification message, it obtains identification information of the first notification message, and determines whether the stored history notification messages include a target history notification message corresponding to the identification information. When it is determined that the stored history notification messages include the target history notification message corresponding to the identification information, the target history notification message is updated according to the first notification message. For example, the target history notification message corresponding to the identification information of the first notification message may be deleted, and the first notification message may be stored. When it is determined that the stored history notification messages do not include the target history notification message corresponding to the identification information, the first notification message is stored.

The identification information is used to indicate the first notification messages. When the first notification messages are first notification messages that are pushed for updating a same event by a same push end, identification information of a first notification message for updating the event is the same with identification information of a first notification message before updating the event. The identification information may include an identifier, for example, the identifier may be a character, such as "a". Specific form of the identification information is not limited in the present disclosure. Still taking the above sport software as an example, the sport software may periodically push the first notification messages to the terminal, thus informing the user of his/her own exercise situation through the terminal. For example, when the sport software obtains the steps at the current pushing time (the time at which a notification message is pushed to the terminal) as 3600, the sport software pushes a first notification message including the 3600 steps to the terminal, and the first notification message is stored (corresponding to a history notification message). If the user continues to exercise for some time, and steps at a next pushing time is 6800, an updated first notification message ((corresponding to a notification message) including the 6800 steps is pushed to the terminal. At this time, identification information of the updated first notification message obtained by the terminal is "a". It may be determined whether there is a target history notification message (the first notification message including the 3600 steps) corresponding to the identification information "a" in the history notification messages according the identification information "a". If there is a target history notification message whose identification information is "a", the target history notification message is deleted, and the updated first notification message is stored. For another example, still taking the above shopping software as an example, the shopping software may push the first notification messages to the terminal according to the logistics situation of the goods purchased by the user, thus informing the user of the logistics information of the goods purchased by the user through the terminal. For example, a first notification message (corresponding to a history notification message) pushed to the terminal by the shopping software includes "having been sent out from aviation department of Shanghai city on August 6, 2016". If updated logistics information of the goods is "arriving at Xi'an city on August 9, 2016", an updated first notification message (corresponding to the first notification message) including "arriving at Xi'an city on August 9, 2016" is pushed to the terminal. At this time, identification information of the updated first notification message obtained by the terminal is "b". It may be determined whether there is a target history notification message (the notification message including "having been sent out from aviation department of Shanghai city on August 6, 2016") corresponding to the identification information "b" in the history notification messages according the identification information "b". If there is a target history notification message whose identification information is "b", the target history notification message is deleted, and the updated first notification message is stored.

It should be noted that, after the first notification message is cleared from the notification bar, the first notification message is a history notification message.

In step 203, the terminal receives the current message viewing request of the user.

The message viewing request is used to request to view history notification messages. The history notification messages include notification messages having been cleared from the notification bar of the terminal.

This step may include following two implementation ways.

In Way 1, a triggering instruction of a user on a query button is received, and the message viewing request is generated.

In a possible embodiment, the triggering instruction may be a click instruction of the user when the user clicks on the query button arranged on the notification bar, and the terminal generates the message viewing request according to the click instruction.

In another possible embodiment, the user may be directed to the query button according to a preset menu path. For example, the query button may be in "setting" menu of the terminal, and the preset menu path may be "setting- notification and status bar- history notification message querying". Thus, the user first clicks "setting" to enter a menu of "setting", finding "notification and status bar" in the menu of "setting", and then clicks "notification and status bar", finding "history notification message querying" in a menu displayed by the "notification and status bar", and then clicks "history notification message querying", to request to view the history notification messages.

In Way 2, when a first triggering operation corresponding to the first notification message currently displayed in the notification bar is received from the user, it is determined whether the first triggering operation meets a first preset operation. When the first triggering operation meets the first preset operation, the message viewing request is generated.

In this embodiment, the first triggering operation may include click operations. When a number of the continuous click operations reaches a preset number, it is determined that the first triggering operation meets the first preset operation. For example, if the first preset operation is clicking a notification message three times within a preset time, then it is determined that the first triggering operation meets the first preset operation when the user clicks the notification message three times continuously within the preset time. The first triggering operation may also include a first press operation. When a duration of the first press operation reaches a preset time, it is determined that the first triggering operation meets the first preset operation. For example, if the first preset operation is long pressing a notification message for 5s, it is determined that the first triggering operation meets the first preset operation when the user long presses the notification message for 5s.

It should be noted that, the first preset operation is not limited in the present disclosure, and may further include other operations, such as a sliding operation. For example, the first preset operation may also be a left sliding operation to a notification message. When the user's finger slides leftwards, it is determined that the first triggering operation meets the first preset operation.

In step 204, after the terminal receives the message view request, the terminal obtains stored history notification messages.

There may be plenty of history notification messages stored in the terminal, but the user may be not concerned with some history notification messages that have long storage time or are spam messages (such as advertising messages or marketing messages). In order to solve the above problem, in another embodiment of the present disclosure, the message view request may further include a search condition input by the user, and history notification messages matched with the search condition are obtained.

For example, the search condition may be a search time period, and then history notification messages in the search time period are obtained according to the search time period. For example, if the search time period input by the user is from October 1, 2016 to October 31, 2016, the terminal obtains history notification messages in this search time period. The search condition may also be an identification (such as a name of an application) of a push end for pushing the history notification messages, and then history notification messages corresponding to the push end are obtained according to the identification of the push end. For another example, if the identification of an application input by the user is Xiaomi mall or Xiaomi sports, the terminal obtains history notification messages of Xiaomi mall or Xiaomi sports. In addition, the above search time period and identification of push end may be combined as the search condition. For example, when the search conditions input by the user are "October 1, 2016 to October 31, 2016" and "Xiaomi mall or Xiaomi sports", the terminal obtains history notification messages of "Xiaomi mall or Xiaomi sports" within "October 1, 2016 to October 31, 2016" . In addition, the search condition may also be a text keyword corresponding to a history notification message. If a text keyword input by the user is travel, history notification messages corresponding to travel are obtained according to the text keyword. The above search conditions are just exemplary illustration, which is not limited in the present disclosure. Thus, it is convenient to obtain history notification messages which the user needs according to the search condition input by the user, improving user experience.

In step 205, the history notification messages are displayed.

A current interface may be switched to a message displaying interface, and thus the history notification messages may be displayed in the message displaying interface.

In a possible implementation, the history notification messages may be displayed according to a default order. For example, the terminal may display the history notification messages according to displaying priorities of the obtained history notification messages. For example, the displaying priorities may be set by obtaining access times that the user accesses applications corresponding to the history notification messages. Specifically, a history notification message corresponding to an application having high access times may be set to display at the top of the message displaying interface. For example, if the number of times that the user accesses Xiaomi mall is more than the number of times that the user accesses Xiaomi sports, the terminal may set the history notification messages corresponding to Xiaomi mall at the top of the message displaying interface, set the history notification messages corresponding to Xiaomi sports at the bottom of the message displaying interface, and displays them together to the user.

In another possible implementation, the history notification messages may be displayed according to a displaying order input by the user. For example, the displaying order may be a time order (for example, in chronological order or in reverse chronological order), so that the terminal displays the history notification messages according to the time order. The displaying order may also be an order in which the history notification messages are sequenced by obtaining category attributes (such as food, shopping, game, news etc.) of the history notification messages. If the user is a game enthusiast, history notification messages corresponding to game may be displayed to the user first according to an order set by the user, and then history notification messages corresponding to other category attributes are displayed to the user according to the order set by the user.

Certainly, the above displaying orders are only for exemplary illustration, which is not limited in the present disclosure.

After viewing the displayed history notification messages, the user may wish some important history notification messages to be locally collected. Therefore, in another embodiment of the present disclosure, the terminal may receive a collecting instruction corresponding to the history notification messages from the user, and collect the history notification messages according the collecting instruction.

In a possible implementation, the collecting instruction corresponding to the history notification messages from the user may be received in following ways. When a second triggering operation corresponding to the displayed history notification messages is received from the user, it is determined whether the second triggering operation meets a second preset operation. When the second triggering operation meets the second preset operation, the collecting instruction is generated.

For example, if the second preset operation includes a second press operation, the terminal determines whether a pressure of the second press operation reaches a preset pressure. When the pressure of the second press operation reaches the preset pressure, it is determined that the second triggering operation meets the second preset operation. For example, when the second press operation is a force touch, and a pressure of the force touch input by the user meets the preset pressure, the second triggering operation meets the second preset operation. If the second triggering operation includes a sliding operation, the terminal determines whether a sliding direction of the sliding operation is a preset direction. When the sliding direction is the preset direction, it is determined that the second triggering operation meets the second preset operation. For example, when the second preset operation is a right sliding operation, and the user inputs the right sliding operation, the second triggering operation meets the second preset operation. It should be noted that, the second preset operation may also be other triggering operations, such as an upward sliding operation or a downward sliding operation.

After displaying the history notification messages, the terminal may receive an uninstall instruction corresponding to a push end from the user. Then, after the push end is uninstalled according to the uninstall instruction, the terminal deletes the history notification messages corresponding the push end, thus deleting history notification messages in which the user is not interested together with the push end. For example, the push end is Xiaomi sports, and after the user uninstalls Xiaomi sports from the terminal, the terminal deletes history notification messages corresponding to the Xiaomi sports.

By using the above methods, the user can still request to view a notification message even if the notification message is cleared from the notification bar of the terminal.

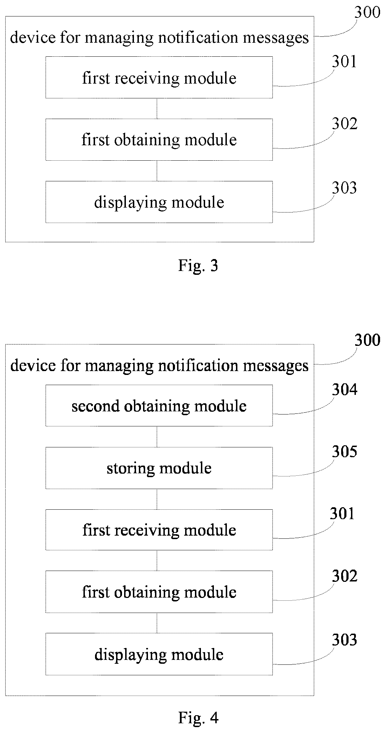

Fig. 3 is a block diagram of a device for managing notification messages according to a first exemplary embodiment of the present disclosure. As shown in Fig. 3, the device includes a first receiving module 301, a first obtaining module 302, and a displaying module 303.

The first receiving module 301 is configured to receive a current message viewing request of a user.

The first obtaining module 302 is configured to obtain stored history notification messages according to the message viewing request.

The history notification messages include a first notification message having been cleared from a notification bar of the terminal.

The displaying module 303 is configured to display the obtained history notification messages.

Fig. 4 is a block diagram of a device for managing notification messages according to the embodiment shown in Fig. 3. The device further includes a second obtaining module 304 and a storing module 305.

The second obtaining module 304 is configured to obtain the first notification message displayed in the notification bar.

The storing module 305 is configured to store the first notification message.

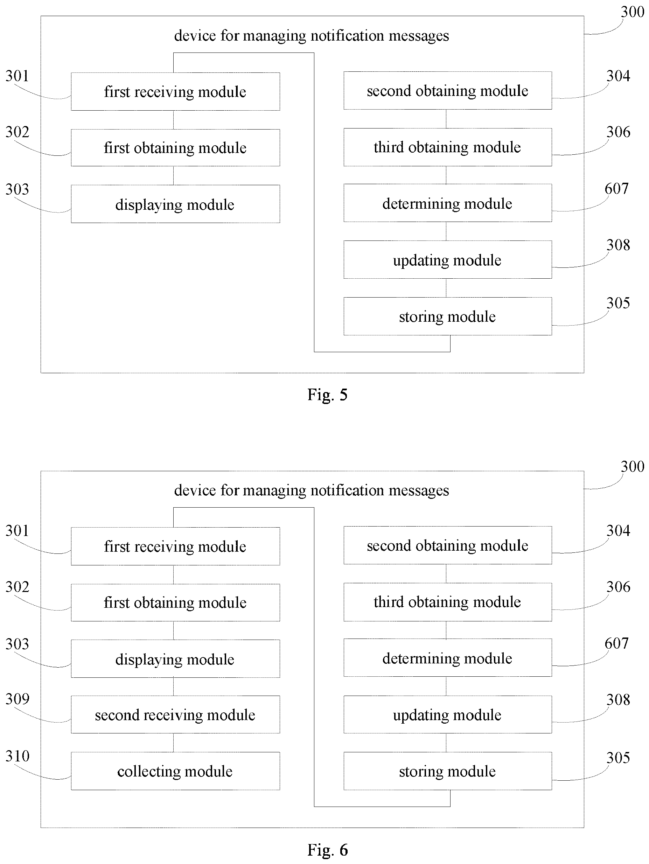

Fig. 5 is a block diagram of a device for managing notification messages according to the embodiment shown in Fig. 4. The device further includes a third obtaining module 306, a determining module 307, and an updating module 308.

The third obtaining module 306 is configured to obtain identification information of the first notification message.

The determining module 307 is configured to determine a target history notification message corresponding to the identification information.

The updating module 308 is configured to update the target history notification message according to the first notification message.

Alternatively, the first receiving module 301 is configured to determine whether a first triggering operation meets a first preset operation when the first triggering operation corresponding to the first notification message currently displayed in the notification bar is received from the user, and to generate the message viewing request when the first triggering operation meets the first preset operation.

Alternatively, the first receiving module 301 is configured to determine that the first triggering operation meets the first preset operation when the first triggering operation includes click operations and a number of the click operations reaches a preset number, or determine that the first triggering operation meets the first preset operation when the first triggering operation includes a first press operation and a duration of the first press operation reaches a preset time.

Alternatively, the message viewing request includes a search condition input by the user, and the first obtaining module 302 is configured to obtain history notification messages matched with the search condition.

Alternatively, when the search condition includes an identification of a push end for pushing the history notification messages, the first obtaining module 302 is configured to obtain history notification messages corresponding to the push end according to the identification of the push end. When the search condition includes a search time period, the first obtaining module 302 is configured to obtain history notification messages in the search time period.

Alternatively, the displaying module 303 is configured to display the history notification message according to displaying priorities of the obtained history notification messages, or to display the history notification message according to a displaying order input by the user.

Alternatively, Fig. 6 is a block diagram of a device for managing notification messages according to the embodiment shown in Fig. 3. The device further includes a second receiving module 309 and a collecting module 310.

The second receiving module 309 is configured to receive a collecting instruction corresponding to the history notification message from the user.

The collecting module 310 is configured to collect the history notification message according the collecting instruction.

Alternatively, the second receiving module 309 is configured to determine whether a second triggering operation meets a second preset operation when the second triggering operation corresponding to the displayed history notification messages is received from the user, and to generate the collecting instruction when the second triggering operation meets the second preset operation.

Alternatively, the second receiving module 309 is configured to determine that the second triggering operation meets the second preset operation when the second triggering operation includes a second press operation and a pressure of the second press operation reaches a preset pressure, or determine that the second triggering operation meets the second preset operation when the second triggering operation includes a sliding operation and a sliding direction of the sliding operation is a preset direction.

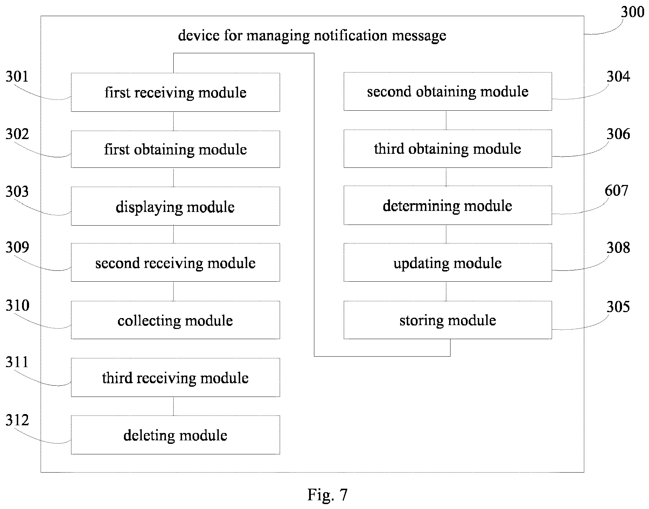

Alternatively, Fig. 7 is a block diagram of a device for managing notification messages according to the embodiment shown in Fig. 3. The device further includes a third receiving module 311 and a deleting module 312.

The third receiving module 311 is configured to receive an uninstall instruction corresponding to a push end for pushing the history notification message from the user.

The deleting module 312 is configured to delete the history notification messages corresponding the push end, after the push end is uninstalled according to the uninstall instruction.

With respect to the device in the above embodiments, specific manners for respective modules performing operations have been described in detail in the related method embodiments and detailed descriptions thereof are omitted herein.

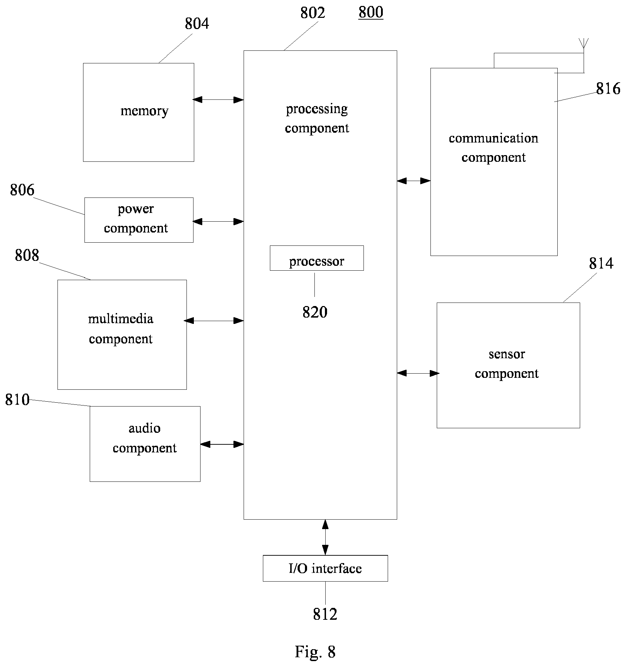

Fig. 8 is a schematic diagram showing a structure of a device 800 for managing notification messages according to an exemplary embodiment of the present disclosure. For example, the device 800 may be a mobile phone, a computer, a digital broadcasting terminal, a messaging device, a game console, a tablet device, a medical device, fitness equipment, a Personal Digital Assistant PDA, and the like.

As shown in Fig. 8, the device 800 may include the following one or more components: a processing component 802, a memory 804, a power component 806, a multimedia component 808, an audio component 810, an Input/ Output (I/O) interface 812, a sensor component 814, and a communication component 816.

The processing component 802 typically controls overall operations of the electronic device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 402 and other components. For instance, the processing component 802 may include a multimedia module to facilitate the interaction between the multimedia component 408 and the processing component 802.

The memory 804 is configured to store various types of data to support the operation of the electronic device 800. Examples of such data include instructions for any applications or methods operated on the electronic device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the electronic device 800. The power component 806 may include a power management system, one or more power sources, and any other components associated with the generation, management, and distribution of power in the electronic device 800.

The multimedia component 808 includes a screen providing an output interface between the electronic device 800 and the user, and the four corner of the screen are rounded. In some embodiments, the screen may include a liquid crystal display (LCD) and a press panel (TP). If the screen includes the press panel, the screen may be implemented as a press screen to receive input signals from the user. The press panel includes one or more press sensors to sense presses, swipes, and other gestures on the press panel. The press sensors may not only sense a boundary of a press or swipe action, but also sense a duration time and a pressure associated with the press or swipe action. In some embodiments, the multimedia component 808 includes a front camera and/or a rear camera. The front camera and/or the rear camera may receive external multimedia data while the electronic device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the electronic device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface for the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the electronic device 800. For instance, the sensor component 814 may detect an open/closed status of the electronic device 800 and relative positioning of components (e.g. the display and the keypad of the electronic device 800. The sensor component 814 may also detect a change in position of the electronic device 800 or of a component in the electronic device 800, a presence or absence of user contact with the electronic device 800, an orientation or an acceleration/deceleration of the electronic device 800, and a change in temperature of the electronic device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate wired or wireless communication between the electronic device 800 and other devices. The electronic device 800 can access a wireless network based on a communication standard, such as WIFI, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the electronic device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 804 including instructions. The instructions may be performed by the processor 820 of the electronic device 800 so as to realize the method for generating information. For example, the non-transitory computer-readable storage medium may be a ROM, a RAM, a CD-ROM, a magnetic tape, a floppy disc, an optical data storage device, and the like.

When the instructions in the storage medium are performed by the processor of a mobile terminal, the mobile terminal may execute a method for managing notification messages, and the method includes: receiving a current message viewing request of a user, obtaining stored history notification messages according to the message viewing request, and displaying the obtained history notification messages.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art.

## Claims

1. A method for managing notification messages, applied in a terminal, and comprising:
receiving a message viewing request of a user (101);
obtaining stored history notification messages according to the message viewing request (102), wherein the history notification messages comprise a first notification message having been cleared from a notification bar of the terminal; and
displaying the obtained history notification messages (103).

2. The method according to claim 1, further comprising:
obtaining the first notification message displayed in the notification bar (201);
storing the first notification message (202).

3. The method according to claim 2, further comprising:
obtaining identification information of the first notification message;
determining a target history notification message corresponding to the identification information;
updating the target history notification message according to the first notification message.

4. The method according to any one of claims 1 to 3, wherein receiving a current message viewing request of a user comprises:
when a first triggering operation corresponding to the first notification message currently displayed in the notification bar is received from the user, determining whether the first triggering operation meets a first preset operation;
when the first triggering operation meets the first preset operation, generating the message viewing request;
especially, determining whether the first triggering operation meets a first preset operation comprises:
when the first triggering operation comprises click operations and a number of the click operations reaches a preset number, determining that the first triggering operation meets the first preset operation;
when the first triggering operation comprises a first press operation and a duration of the first press operation reaches a preset time, determining that the first triggering operation meets the first preset operation.

5. The method according to any one of claims 1 to 4, wherein the message viewing request comprises a search condition input by the user, and obtaining stored history notification messages according to the message viewing request comprises:
obtaining history notification messages matched with the search condition, wherein,
when the search condition comprises an identification of a push end for pushing the history notification messages, obtaining history notification messages matched with the search condition comprises obtaining history notification messages corresponding to the push end according to the identification of the push end;
when the search condition comprises a search time period, obtaining history notification messages matched with the search condition comprises obtaining history notification messages in the search time period.

6. The method according to any one of claims 1 to 5, wherein displaying the obtained history notification messages comprises:
displaying the history notification messages according to displaying priorities of the obtained history notification messages; or
displaying the history notification messages according to a displaying order input by the user.

7. The method according to any one of claims 1 to 6, further comprising:
receiving a collecting instruction corresponding to the history notification messages from the user;
collecting the history notification messages according the collecting instruction;
especially, receiving a collecting instruction corresponding to the history notification messages from the user comprises:
when a second triggering operation corresponding to the displayed history notification messages is received from the user, determining whether the second triggering operation meets a second preset operation;
when the second triggering operation meets the second preset operation, generating the collecting instruction;
especially, determining whether the second triggering operation meets a second preset operation comprises:
when the second triggering operation comprises a second press operation and a pressure of the second press operation reaches a preset pressure, determining that the second triggering operation meets the second preset operation;
when the second triggering operation comprises a sliding operation and a sliding direction of the sliding operation is a preset direction, determining that the second triggering operation meets the second preset operation.

8. The method according to any one of claims 1 to 7, further comprising:
receiving an uninstall instruction corresponding to a push end for pushing the history notification messages from the user;
after uninstalling the push end according to the uninstall instruction, deleting the history notification messages corresponding the push end.

9. A device for managing notification messages, applied in a terminal, and comprising:
a first receiving module (301), configured to receive a message viewing request of a user;
a first obtaining module (302), configured to obtain stored history notification messages according to the message viewing request, wherein the history notification messages comprise a first notification message having been cleared from a notification bar of the terminal; and
a displaying module (303), configured to display the obtained history notification messages.

10. The device according to claim 9, further comprising:
a third obtaining module (306), configured to obtain identification information of the first notification message;
a determining module (307), configured to determine a target history notification message corresponding to the identification information;
an updating module (308), configured to update the target history notification message according to the first notification message.

11. The device according to any one of claims 9-10, wherein the first receiving module (301) is configured to:
when a first triggering operation corresponding to the first notification message currently displayed in the notification bar is received from the user, determine whether the first triggering operation meets a first preset operation;
when the first triggering operation meets the first preset operation, generate the message viewing request;
especially, the first receiving module (301) is configured to:
when the first triggering operation comprises click operations and a number of the click operations reaches a preset number, determine that the first triggering operation meets the first preset operation;
when the first triggering operation comprises a first press operation and a duration of the first press operation reaches a preset time, determine that the first triggering operation meets the first preset operation.

12. The device according to any one of claims 9-11, wherein the message viewing request comprises a search condition input by the user, and the first obtaining module (302) is configured to obtain history notification messages matched with the search condition;
wherein,
when the search condition comprises an identification of a push end for pushing the history notification messages, the first obtaining module (302) is configured to obtain history notification messages corresponding to the push end according to the identification of the push end;
when the search condition comprises a search time period, the first obtaining module (302) is configured to obtain history notification messages in the search time period.

13. The device according to any one of claims 9-12, wherein the displaying module (303) is configured to display the history notification messages according to displaying priorities of the obtained history notification messages; or to display the history notification messages according to a displaying order input by the user.

14. The device according to any one of claims 9-13, further comprising:
a second receiving module (309), configured to receive a collecting instruction corresponding to the history notification messages from the user;
a collecting module (310), configured to collect the history notification messages according the collecting instruction;
especially, the second receiving module (309) is configured to:
when a second triggering operation corresponding to the displayed history notification messages is received from the user, determine whether the second triggering operation meets a second preset operation;
when the second triggering operation meets the second preset operation, generate the collecting instruction;
especially, the second receiving module (309) is configured to:
when the second triggering operation comprises a second press operation and a pressure of the second press operation reaches a preset pressure, determine that the second triggering operation meets the second preset operation;
when the second triggering operation comprises a sliding operation and a sliding direction of the sliding operation is a preset direction, determine that the second triggering operation meets the second preset operation.

15. A device for managing notification messages, comprising:
a processor;
a memory for storing instructions executable by the processor;
wherein the processor is configured to run the instructions stored in the memory so as to perform the method for managing notification messages according to any one of claims 1 to 8.
